# EUROPÄISCHE PATENTANMELDUNG

(11) **EP 4 717 582 A1**
(43) Veröffentlichungstag der Anmeldung: **01.04.2026**
(21) Anmeldenummer: 25199333.3
(22) Anmeldetag: 01.09.2025
(51) Int. Cl.: B63B 35/32, E02B 15/10, E02B 15/04

(54) **VORRICHTUNG ZUM AUFNEHMEN VON ÖLREICHEN FLÜSSIGKEITEN VON EINER WASSEROBERFLÄCHE**

(30) Priorität: 20.09.2024 DE 202024105396 U; 16.12.2024 DE 202024107300 U
(71) Anmelder: Koormann, Hermann, 26605 Aurich (DE)
(72) Erfinder: Koormann, Hermann, 26605 Aurich (DE)
(74) Vertreter: Jabbusch, Matthias

(57) **Zusammenfassung**

Bei einer Vorrichtung zum Aufnehmen von ölreichen Flüssigkeiten von einer Wasseroberfläche, umfassend zumindest einen Schwimmkörper, ist vorgesehen, dass der Schwimmkörper zumindest abschnittsweise in seinen Randbereichen wenigstens einen Rinnenkörper aufweist, dessen dem Schwimmkörper abgewandte Rinnenwand einen Rand hat, der im Schwimmzustand des Schwimmkörpers oberhalb der Wasseroberfläche angeordnet ist.

Mit dieser Vorrichtung gelingt es mit technologisch einfachen Mitteln, ölreiche Flüssigkeiten von der Wasseroberfläche aufzunehmen.

## Beschreibung

Die Erfindung betrifft eine Vorrichtung zum Aufnehmen von ölreichen Flüssigkeiten von einer Wasseroberfläche, umfassend zumindest einen Schwimmkörper.

Durch Schiffsunglücke sowie durch Unachtsamkeiten, beispielsweise beim Entleeren von Laderäumen in Schiffen oder auch durch Unfälle an Ölleitungen, können ölreiche Flüssigkeiten in Gewässer gelangen. Bei diesen Gewässern kann es sich um Meere, Flüsse, Kanäle, Seen oder andere Gewässer handeln.

Damit ausgetretene ölreiche Flüssigkeiten nicht zu einer größeren Umweltbelastung führen, sind bereits Vorrichtungen zum Aufnehmen der ölreichen Flüssigkeiten vorgeschlagen worden. Diese können Saugvorrichtungen umfassen, es werden auch schwimmende Barrieren eingesetzt.

Der Erfindung liegt die Aufgabe zugrunde, eine Vorrichtung der eingangsgenannten Gattung aufzuzeigen, mit der es mit technologisch einfachen Mitteln gelingt, ölreiche Flüssigkeiten von der Wasseroberfläche aufzunehmen.

Diese Aufgabe ist erfindungsgemäß dadurch gelöst, dass der Schwimmkörper zumindest abschnittsweise in seinen Randbereichen wenigstens einen Rinnenkörper hat, dessen dem Schwimmkörper abgewandte Rinnenwand einen Rand aufweist, der im Schwimmzustand des Schwimmkörpers oberhalb der Wasseroberfläche angeordnet ist.

Die erfindungsgemäße Vorrichtung weist zumindest einen Schwimmkörper auf. Der Schwimmkörper kann auf der Wasseroberfläche angeordnet werden, er kann an eine Ausbreitung einer ölreichen Flüssigkeit angenähert werden. Erfindungsgemäß ist dieser Schwimmkörper mit einem Rinnenkörper ausgerüstet, wobei der Rinnenkörper in Randbereichen des Schwimmkörpers angeordnet ist. Diese Randbereiche des Schwimmkörpers sind der Wasseroberfläche angenähert, es erfolgt also eine Anordnung des Rinnenkörpers in der Nähe der Wasseroberfläche.

Nach der Erfindung wird der Rinnenkörper am Schwimmkörper in einer bestimmten Bauhöhe angeordnet. Die Bauhöhe ist so gewählt, dass die dem Schwimmkörper abgewandte Rinnenwand einen oberhalb der Wasseroberfläche angeordneten Rand aufweist. Der Rinnenkörper kann am Schwimmkörper so angeordnet sein, dass er sich innerhalb der Wasseroberfläche befindet. Die dem Schwimmkörper abgewandte Rinnenwand taucht dann aus der Wasseroberfläche auf, ihr oben liegender Rand ist oberhalb der Wasseroberfläche angeordnet. Diese Anordnung bewirkt, dass Wellenbewegungen über den Rand der Rinnenwand hinweg schwappen können und bei einer Belastung mit ölreicher Flüssigkeit diese ölreiche Flüssigkeit in den Rinnenkörper eintragen. Durch entsprechende natürliche Bewegung der Wasseroberfläche wird die ölreiche Flüssigkeit in den in den Rinnenkörper eingeschwemmt, der Rinnenkörper bildet mit seiner den Schwimmkörper abgewandten Rinnen Band einen Abscheider aus. Der Schwimmkörper kann auch aktiv in Richtung der ölreichen Flüssigkeit bewegt werden.

Der Rand der Rinnenwand ist im Schwimmzustand des Schwimmkörpers vorzugsweise wenige Zentimeter oberhalb der Wasseroberfläche angeordnet. Das Wasser steht mit seiner Oberfläche an der Außenseite des Rinnenkörpers an, durch Bewegung der Wasseroberfläche kann Flüssigkeit mit ölreichen Flüssigkeitsbestandteilen über die Rinnenwand hinweg in den Rinnenkörper eintreten.

Für eine optimale Abscheidung der ölreichen Flüssigkeiten von der Wasseroberfläche ist es zweckmäßig, dass der Schwimmkörper ruhig auf der Wasseroberfläche liegt. Das gelingt vorzugsweise durch eine floßartige, größere Ausbildung des Schwimmkörpers. Er kann beispielsweise Abmessungen von zehn Metern mal fünf Metern haben.

An den Rinnenkörper ist nach einer Weiterbildung der Erfindung zumindest eine Flüssigkeitsabführleitung angesetzt. In den Rinnenkörper eingetretene ölreiche Flüssigkeit wird durch diese Flüssigkeitsabführleitung wieder aus dem Rinnenkörper entfernt und einer Nutzung beziehungsweise Entsorgung zugeführt. Die Flüssigkeitsabführleitung ist vorzugsweise als Saugleitung ausgebildet, es ist möglich, dass an diese Leitung zumindest eine Pumpe angeschlossen ist.

Nach einer nächsten Weiterbildung der Erfindung kann noch vorgesehen sein, dass der Schwimmkörper Verbindungsmittel zum Verbinden mit anderen, vorzugsweise baugleichen, Schwimmkörpern aufweist. Mit den Verbindungsmitteln kann ein Schwimmkörper mit einem anderen Schwimmkörper verbunden werden, beispielsweise um einen größeren, insbesondere längeren, Rinnenkörper bereitzustellen. Es kann mit diesen Verbindungsmitteln aber auch gelingen, mehrere Schwimmkörper so miteinander zu verbinden, dass sie einen Bereich der Wasseroberfläche umgeben. In diesem Bereich der Wasseroberfläche kann beispielsweise ein havariertes Schiff angeordnet sein, es kann sich auch um einen leckgeschlagenen Öl-Bohrturm oder ähnliches handeln. Wie bei den bekannten schwimmenden Barrieren wird mit der erfindungsgemäßen Vorrichtung eine Kette von Schwimmkörpern mit Rinnenkörpern ausgebildet. Zum einen, um eine Ausbreitung von ölreichen Flüssigkeiten zu verhindern, zum anderen aber auch, um diese ölreiche Flüssigkeiten mit den Rinnenkörpern aufzunehmen.

Ausführungsbeispiele der Erfindung ist in der Zeichnung dargestellt. Es zeigen:
- Figur 1:: eine Ansicht der erfindungsgemäßen Vorrichtung zum Aufnehmen von ölreichen Flüssigkeiten in einer Wasseroberfläche,
- Figur 1a:: eine weitere Schnittansicht einer erfindungsgemäßen Vorrichtung,
- Figur 1b:: eine Draufsicht auf die Vorrichtung gemäß Figur 1a,
- Figur 2:: eine Draufsicht auf zahlreiche erfindungsgemäße Vorrichtungen nach Figur 1 in einer umrahmenden Anordnung um ein Seeschiff herum,
- Figur 3:: eine Draufsicht auf eine Vielzahl von erfindungsgemäßen Vorrichtungen nach Figur 1, einen Bohrturm umrahmend, und

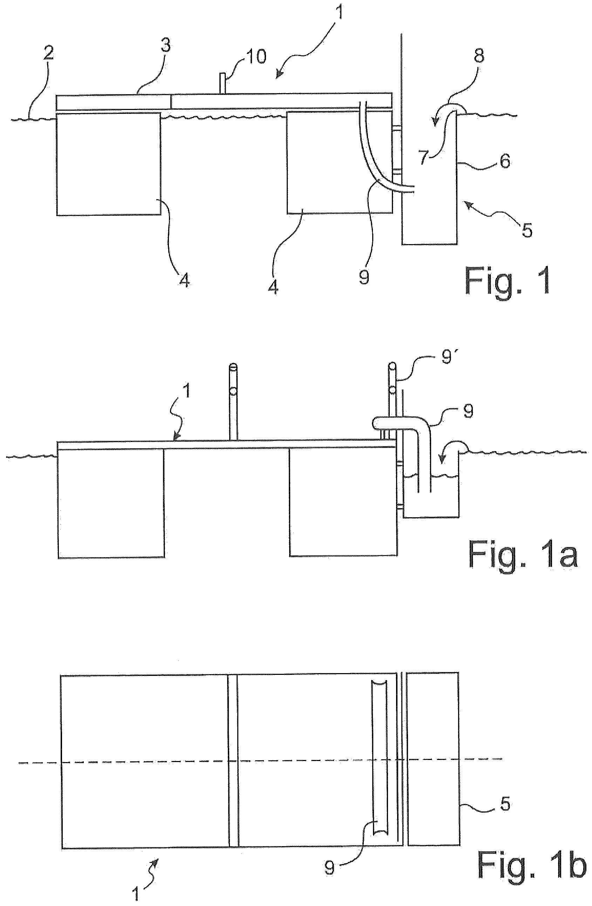

Die erfindungsgemäße Vorrichtung in Figur 1 umfasst einen Schwimmkörper 1, der auf einer Wasseroberfläche 2 schwimmend angeordnet ist. Der Schwimmkörper 1 weist eine Plattform 3 auf, an der ins Wasser eintauchende Schwimmbehälter 4 angeordnet sind.

Der Schwimmkörper 1 hat an seinem in Figur 1 rechten Randbereich einen Rinnenkörper 5. Der Rinnenkörper 5 ist an einem Schwimmbehälter 4 des Schwimmkörpers 1 befestigt. Wie der Schwimmbehälter 4 taucht der Rinnenkörper 5 in das Wasser unterhalb der Wasseroberfläche 2 ein.

Die dem Schwimmkörper 1 abgewandte Rinnenwand 6 hat einen oberen Rand 7, der im in Figur 1 gezeigten Schwimmzustand des Schwimmkörpers 1 oberhalb der Wasserfläche 2 angeordnet ist. Diese Anordnung erfolgt nur wenige Zentimeter oberhalb der Wasseroberfläche 2, so dass auf der Wasseroberfläche 2 schwimmende ölreiche Flüssigkeiten gemäß Pfeil 8 in den Rinnenkörper 5 eintreten können. Die eingetretenen ölreichen Flüssigkeiten können beispielsweise über einen Saugrüssel aus dem Rinnenkörper 5 wieder entfernt werden, sie können aber auch über eine Leitung 9 in die Plattform 3 geführt werden und dort zu einem Stutzen 10 gelangen, an den eine Saugleitung angeschlossen werden kann.

In Figur 1a ist eine abweichende Absaugung der ölreichen Flüssigkeit gezeigt. Eine Leitung 9 wird direkt aus dem Rinnenkörper 5 in einen Bereich oberhalb der Wasseroberfläche geführt. Der Schwimmkörper 1 trägt weitere Leitungen 9'.

Die Draufsicht in Figur 1b zeigt die Zuordnung von Schwimmkörper 1 und Rinnenkörper 5 zueinander.

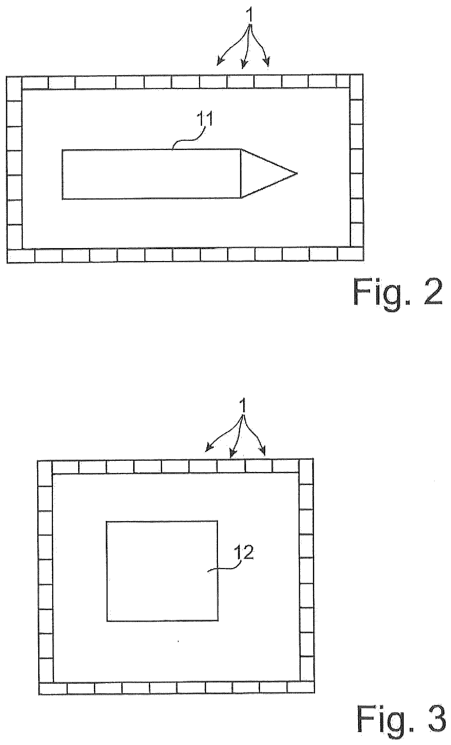

Die erfindungsgemäße Vorrichtung kann in einzelner Form eingesetzt werden, wie in Figur 1, 1a und 1b gezeigt. Figur 2 zeigt dagegen, dass eine Verbindung mehrerer Schwimmkörper 1 bis zu einer Umrahmung eines Seeschiffes 11 möglich ist. Die Schwimmkörper 1 haben nicht weiter dargestellte Verbindungsmittel zum Verbinden mit anderen Schwimmkörpern 1, sie können wie in Figur 2 gezeigt, kettenartig miteinander verbunden werden. Figur 2 zeigt, dass das Seeschiff 11 von einem Rinnenkörper 5 umschlossen ist. In gleicher umschließender Weise ist dem Rinnenkörper 5 die Leitung 9 zum Absaugen des aufgefangenen zum Beispiel Öls zugeordnet. Die Leitung 9 führt zu einer zentralen Ölpumpe 13.

Figur 3 zeigt noch so einen Anwendungsfall, eine nahezu quadratische Ausrichtung mehrerer Schwimmkörper 1 um einen Bohrturm 12 herum. Auch hier zeigt die Einzelheit in Figur 3a wieder den Rinnenkörper 5 und die Leitung 9, die auch hier zu einer zentralen Pumpe 13 führt.

Sowohl in Figur 2 als auch in Figur 3 ist jeweils eine Leckage 15 von Seeschiff 11 oder Bohrturm 12 angedeutet. Der Austritt einer ölreichen Flüssigkeit ist jeweils durch Wellen 15 verdeutlicht.

## Patentansprüche

1. Vorrichtung zum Aufnehmen von ölreichen Flüssigkeiten von einer Wasseroberfläche, umfassend zumindest einen Schwimmkörper,
**dadurch gekennzeichnet,**
**dass** der Schwimmkörper (1) zumindest abschnittsweise in seinen Randbereichen wenigstens einen Rinnenkörper (5) aufweist, dessen dem Schwimmkörper (1) abgewandte Rinnenwand (6) einen Rand (7) hat, der im Schwimmzustand des Schwimmkörpers (1) oberhalb der Wasseroberfläche (2) angeordnet ist.

2. Vorrichtung nach Anspruch 1, **dadurch gekennzeichnet, dass** der Rand (7) der Rinnenwand (6) im Schwimmzustand des Schwimmkörpers (1) wenige Zentimeter oberhalb der Wasseroberfläche (2) angeordnet ist.

3. Vorrichtung nach Anspruch 1 oder 2, **dadurch gekennzeichnet, dass** der Schwimmkörper (1) eine floßartige Ausbildung aufweist.

4. Vorrichtung nach einem der Ansprüche 1 bis 3, **dadurch gekennzeichnet, dass** an den Rinnenkörper (5) zumindest eine Flüssigkeitsabführleitung angesetzt ist.

5. Vorrichtung nach Anspruch 4, **dadurch gekennzeichnet, dass** die Flüssigkeitsabführleitung als Saugleitung ausgebildet ist.

6. Vorrichtung nach einem der vorhergehenden Ansprüche, **dadurch gekennzeichnet, dass** der Schwimmkörper (1) Verbindungsmittel zum Verbinden mit anderen, vorzugsweise baugleichen, Schwimmkörpern (1) aufweist.
